Europäisches Patentamt

European Patent Office

Office européen des brevets

(11) Numéro de publication : **0 444 993 B1**

(12)

# FASCICULE DE BREVET EUROPEEN

(45) Date de publication du fascicule du brevet :
**30.03.94 Bulletin 94/13**

(51) Int. Cl.$^5$ : **H04B 14/04**

(21) Numéro de dépôt : **91400383.5**

(22) Date de dépôt : **14.02.91**

(54) **Dispositif de quantification à débit de codage numérique variable.**

(30) Priorité : **16.02.90 FR 9001913**

(43) Date de publication de la demande :
**04.09.91 Bulletin 91/36**

(45) Mention de la délivrance du brevet :
**30.03.94 Bulletin 94/13**

(84) Etats contractants désignés :
**DE GB**

(56) Documents cités :
**REVIEW OF THE ELECTRICAL COMMUNICA-
TION LABORATORIES, vol. 33, no. 4, 1985,
pages 631-638, Tokyo, JP; H. KURODA et al.:
"1.5Mb/s interframe codec for video teleconferencing"**

(56) Documents cités :
**IEEE JOURNAL ON SELECTED AREAS IN
COMMUNICATIONS, vol. 6, no. 2, février 1988,
pages 401-424, IEEE, New York, US; T. TANI-
GUCHI et al.: "ADPCM with a multiquantizer
for speech coding"**

(73) Titulaire : **FRANCE TELECOM
6, Place d'Alleray
F-75015 Paris (FR)**

(72) Inventeur : **Charbonnier, Alain
13, rue Saint Symphorien
F-78000 Versailles (FR)**
Inventeur : **Petit, Jean Pierre
Lot. Zant-Erwan
F-22220 Minihy-Treguier (FR)**

(74) Mandataire : **Fréchède, Michel et al
Cabinet Plasseraud 84, rue d'Amsterdam
F-75009 Paris (FR)**

## Description

L'invention concerne un dispositif de quantification et un dispositif de quantification inverse d'un signal numérique à débit de codage numérique variable.

Les processus de codage numérique de signaux analogiques comportent essentiellement une opération d'échantillonnage de ces signaux analogiques suivie d'une opération de quantification des échantillons. L'opération d'échantillonnage étant effectuée conformément aux règles habituelles dans les techniques d'échantillonnage, par prélèvement périodique d'échantillons, l'opération de quantification consiste à faire correspondre à chaque échantillon une valeur de code numérique, par comparaison de la valeur de cet échantillon à un certain nombre de valeurs de seuil, au moyen d'un opérateur de quantification.

Au processus de codage précité est associé un processus de décodage du signal de code numérique pour restituer les signaux analogiques d'origine. Le processus de décodage met en oeuvre un opérateur de quantification inverse, lequel restitue une valeur d'échantillon à partir de chaque valeur de code numérique ; l'ensemble des valeurs de code numérique ou codes numériques constitue le signal de code numérique. Les signaux analogiques d'origine peuvent être obtenus par filtrage des échantillons précités. Dans la suite de la description, on désignera par dispositif de quantification l'ensemble d'un opérateur quantificateur et d'un opérateur quantificateur-inverse.

Relativement aux dispositifs de quantification précités, le nombre de valeurs de code, ou codes numériques, possibles est une caractéristique essentielle. En effet, les codes numériques ou les valeurs de code constitutives de ces derniers, sont habituellement exprimés sous forme binaire. Le nombre de bits utilisé pour représenter chaque échantillon, multiplié par la fréquence d'échantillonnage, constitue le débit binaire du codage numérique de ces échantillons.

L'opération de quantification peut cependant être appliquée à des échantillons déjà numérisés, ce qui permet de réduire le nombre de valeurs de code numérique utilisées pour coder un échantillon. Dans la description ci-après, on considèrera des échantillons déjà numérisés auxquels seront appliqués les processus de quantification et de quantification inverse précédemment cités.

Dans les dispositifs de quantification de l'art antérieur, un opérateur quantificateur est caractérisé par le nombre de codes numériques possibles, noté N, et par la valeur de N-1 seuils de quantification, notés $x_i$ où $i$ désigne l'ordre des seuils de quantification. Par convention, $i$ varie de 1 pour la valeur maximum de $x_i$, à N-1, valeur minimum de $x_i$, avec la relation

$$x_{N-1} < x_{N-2} < \ldots < x_2 < x_1$$

Pour un échantillon x donné, on établit le signal quantifié codé I en sortie de l'opérateur quantificateur de la façon ci-après :

si $x < x_{N-1}$ $\quad$ I = N-1

si $x_{i+1} < x < x_i$ $\quad$ I = i

si $x_1 < x$ $\quad$ I = 0.

L'opérateur quantificateur-inverse permet de décoder le signal quantifié codé I en associant un niveau de quantification, noté $y_i$, à chaque valeur de code ou code constituant le signal quantifié codé. Le nombre de niveaux de quantification pour I pouvant prendre les valeurs précédentes de 0 à N-1 est donc égal à N.

Le signal délivré en sortie de l'opérateur quantificateur-inverse, noté y, est donné par la relation $y = y_i$ pour le signal quantifié codé I précédemment défini, à une valeur de code I étant associée en correspondance biunivoque une valeur de signal de sortie $y_i$, pour une plage significative d'amplitude du signal d'origine.

Pour les dispositifs de quantification précédemment définis, on appelle bruit de quantification le signal différence y-x entre l'entrée de l'opérateur quantificateur et la sortie de l'opérateur quantificateur-inverse. La puissance du bruit de quantification est une mesure de la distorsion introduite par le dispositif de quantification. De manière générale, le calcul d'un opérateur quantificateur et d'un opérateur quantificateur-inverse consiste à déterminer la valeur des paramètres de seuil $x_i$ ou niveau $y_i$ de quantification, afin de minimiser la puissance du bruit de quantification, compte tenu de la densité de probabilité du signal x. Pour une étude plus complète des valeurs des paramètres $x_i$ et $y_i$ pour différentes valeurs de N, nombre de codes numériques et nombre de niveaux de quantification, on pourra se reporter à l'article publié par Joël Max, intitulé "Quantizing for Minimun Distorsion" publié dans la revue IRE Trans. Inform. Theory, Vol II-6, pp. 7-12, Mars 1960.

Dans le cas de fonction de densité de probabilité non uniforme, une expression exacte des paramètres $x_i$ et $y_i$ ne peut a priori être obtenue ; à chaque valeur du nombre N de valeurs de code correspond un jeu déterminé de paramètres.

Récemment, les algorithmes de codage à débit variable de la parole et du son ont été étudiés. Le son et la parole présentent une densité de probabilité p(x) non uniforme, voisine d'une fonction de Laplace, la réalisation de systèmes de codage sur la base des algorithmes précités nécessite la mise en oeuvre de plusieurs opérateurs quantificateurs non uniformes, c'est-à-dire plusieurs jeux de paramètres $x_i$ et $y_i$, afin de permettre,

EP 0 444 993 B1

d'une part, le codage du signal à plusieurs débits et, d'autre part, une quantification séparée avec des caractéristiques différentes.

A titre d'exemple, on citera l'algorithme de codage défini par la recommandation G722 du CCITT de juillet 1986, lequel permet de coder, à des débits de 48, 56 ou 64 kbits/s, des échantillons de signal sonore compris dans une bande de fréquence de 40 Hz à 7 kHz.

Pour la mise en oeuvre de l'algorithme de codage précité, quatre opérateurs quantificateur-inverse différents sont nécessaires pour mettre en oeuvre le décodage, le nombre d'opérateurs quantificateur ayant été réduit pour la mise en oeuvre du codage grâce, notamment, à l'introduction de techniques de codes imbriqués.

Les dispositifs de quantification de l'art antérieur sont donc constitués par des dispositifs de quantification fixes, dans la mesure où un opérateur et un opérateur quantificateur-inverse ne permettent d'assurer un codage et un décodage d'échantillons qu'à un seul débit de codage fixé par les jeux de paramètres xi et yi, la mise en oeuvre de dispositif de quantification à débit variable nécessitant, au moins au niveau du décodage, une pluralité d'opérateurs quantificateur-inverse fixes différents.

Un objet de la présente invention est au contraire de remédier aux limitations des dispositifs de quantification de l'art antérieur par la mise en oeuvre d'un dispositif de quantification à débit variable lequel n'utilise qu'un seul quantificateur et un seul quantificateur-inverse pour assurer le codage respectivement le décodage d'un signal numérique à plusieurs débits, tels que des signaux numériques représentatifs de la parole.

Un autre objet de la présente invention est en outre la mise en oeuvre d'un dispositif de quantification dans lequel un seul processus de quantification et un seul jeu de paramètres de valeur de seuil de quantification xi est utilisé pour coder respectivement décoder un signal à plusieurs débits.

Un autre objet de la présente invention est également la mise en oeuvre d'un dispositif de quantification dans lequel le nombre de codes N du dispositif de quantification équivalent est ajustable entre la valeur 1 et une valeur maximum N max.

Un autre objet de la présente invention est également la mise en oeuvre d'un dispositif de quantification à débit variable pouvant être optimisé pour une densité de probabilité variant selon une loi du type loi de Laplace, particulièrement adapté au codage respectivement décodage des signaux représentatifs de la parole et du son, de façon que les paramètres du dispositif de quantification selon l'invention présentent des performances sensiblement identiques à celles obtenues au moyen des dispositifs de l'art antérieur mettant en oeuvre un jeu d'opérateurs quantificateur et quantificateur-inverse fixes optimisés.

Un autre objet de la présente invention est également la mise en oeuvre d'un dispositif de quantification à débit variable susceptible d'être utilisé dans le cadre de nouvelles techniques de codage du son, comme le codage par transformée fréquentielle, dans lequel la quantification et la quantification inverse d'un grand nombre de composantes de signaux à des débits différents, variant dans le temps, doivent être effectuées.

Le dispositif de quantification à débit de codage numérique variable, en fonction du nombre N de codes numériques ou niveaux de quantification d'un signal numérique à répartition d'amplitude selon une loi de densité de probabilité p(x) du type loi de Laplace, $p(x) = \alpha/2\, e^{-\alpha|x|}$ où $|x|$ représente l'amplitude du signal sur un intervalle de fonctionnement symétrique [-xm, +xm], objet de la présente invention, est remarquable en ce qu'il comprend un opérateur quantificateur comportant un opérateur de calcul d'un signal d'amplitude et d'un signal de signe du signal numérique et un opérateur de combinaison du signal d'amplitude et du nombre N de codes numériques par soustraction d'un terme

$$KN = \frac{3}{\alpha} \text{Log}(N + 1)$$

délivrant un signal d'amplitude codé normé, en fonction du nombre N de codes numériques. Un quantificateur à seuils de quantification fixes, dont la valeur des seuils Li est déterminée par la relation

$$Li = -\frac{3}{\alpha} \text{Log}(2i + 1)$$

où i désigne l'ordre des seuils de quantification, reçoit le signal d'amplitude codé normé et délivre un signal d'amplitude quantifié codé à débit de codage fonction du nombre N de codes numériques ou niveaux de quantification.

Le dispositif de quantification à débit de codage numérique variable, en fonction du nombre N de codes numériques ou niveaux de quantification d'un signal d'amplitude quantifié codé (IM), à partir d'un signal numérique (x) à répartition d'amplitude selon une loi de Laplace $p(x) = \alpha/2\, e^{-\alpha|x|}$, où $|x|$ représente l'amplitude du signal numérique sur un intervalle d'amplitude [-xm, +xm], le signal d'amplitude quantifié codé (IM) comportant N codes numériques, objet de la présente invention, est remarquable en ce qu'il comprend un opérateur quantificateur-inverse comportant un quantificateur inverse à niveaux de quantification inverse Γi fixes, dont la valeur est donnée par la relation

$$\Gamma i = -\frac{3}{\alpha} \text{Log}(2i + 2)$$

où i désigne l'ordre des niveaux de quantification inverse. Le quantificateur-inverse à niveaux fixes reçoit le signal d'amplitude quantifié codé (IM) et délivre un signal d'amplitude décodé normé en fonction du nombre N de codes numériques ou niveaux de quantification. Un opérateur de combinaison du signal d'amplitude décodé normé et du nombre N de codes numériques ou niveaux de quantification par addition d'un terme

$$KN = \frac{3}{\alpha} Log(N + 1)$$

est prévu et délivre un signal d'amplitude $|y|$ décodé indépendant du nombre N de codes numériques ou niveaux de quantification. Un opérateur de combinaison du signal d'amplitude $|y|$ décodé et d'un signal de signe (Is) permet de délivrer un signal numérique reconstitué y correspondant au signal numérique x.

Le dispositif de quantification à débit variable objet de la présente invention trouve application au codage et au décodage de signaux numérisés tels que la parole ou le son en vue de leur transmission notamment.

Le dispositif de quantification à débit variable objet de la présente invention sera mieux compris à la lecture de la description et à l'observation des dessins ci-après dans lesquels :

- la Figure 1a représente un schéma synoptique d'un dispositif de quantification à débit variable objet de la présente invention incorporant un opérateur quantificateur correspondant,
- la Figure 1b représente un schéma synoptique d'un dispositif de quantification à débit variable objet de la présente invention incorporant un opérateur quantificateur-inverse correspondant, permettant le décodage des signaux codés au moyen d'un opérateur quantificateur représenté en Figure 1a,
- la Figure 2 représente la fonction caractéristique µ(xi, yi) d'un dispositif de quantification à seuil fixe équivalent au dispositif de quantification à débit variable objet de la présente invention,
- la Figure 3a représente un schéma synoptique d'un dispositif de quantification à débit variable objet de la présente invention incorporant un opérateur quantificateur-inverse plus particulièrement adapté au décodage de signaux codés selon un code imbriqué issus d'un opérateur quantificateur représenté en Figure 3a.

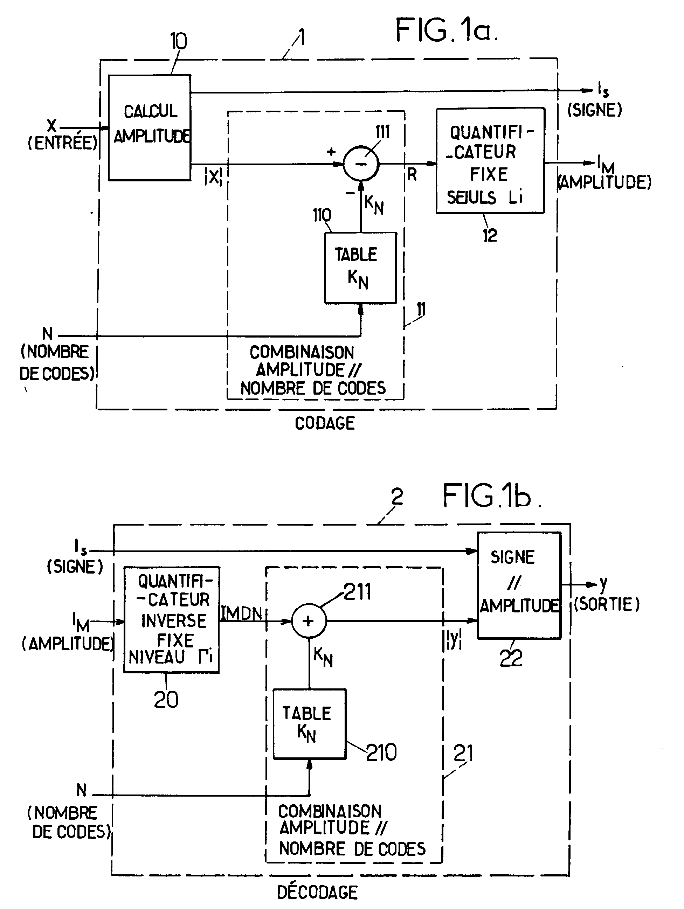

Le dispositif de quantification à débit de codage numérique variable objet de la présente invention sera tout d'abord décrit en liaison avec les Figures 1a et 1b.

De manière générale, on considèrera un signal d'entrée sous forme de signal numérique, noté x, lequel devra être soumis à un processus de codage puis de décodage à débit de codage numérique variable conformément à l'objet de la présente invention.

Le signal numérique x précité correspond à un signal à répartition d'amplitude selon une loi de densité de probabilité notée p(x) du type loi de Laplace, cette loi de densité de probabilité étant de la forme

$$p(x) = \alpha/2.e^{-\alpha|x|}.$$

Dans la loi précitée, le coefficient $\alpha$ est une constante de valeur déterminée, et $|x|$ représente l'amplitude du signal sur un intervalle de fonctionnement symétrique compris entre [-x max et x max].

On notera en particulier que le signal numérique x correspond à un signal échantillonné à une fréquence d'échantillonnage convenable compte tenu du spectre de fréquence du signal x précité. Ces échantillons sont bien entendu numérisés sous forme d'échantillons numériques en amplitude et en signe correspondants.

Ainsi qu'on l'a représenté en Figure 1a, le dispositif de quantification à débit de codage numérique variable selon l'invention comporte un opérateur quantificateur, noté 1, permettant d'assurer le codage à débit de codage variable.

Cet opérateur quantificateur comprend notamment, ainsi que représenté en Figure 1a, un opérateur 10 de calcul permettant de délivrer un signal numérique d'amplitude, noté $|x|$ et d'un signal de signe, noté IS, les signaux d'amplitude $|x|$ et de signe, représentant ainsi respectivement la valeur d'amplitude et la valeur de signe du signal numérique x précité. On comprendra bien entendu que l'opérateur 10 de calcul peut être constitué par un opérateur numérique de type classique capable d'extraire un bit de signe pour constituer le signal de signe IS des échantillons numériques précités plus un mot représentatif de l'amplitude de ce même signal numérique.

Ainsi qu'on l'a en outre représenté en Figure 1a, l'opérateur quantificateur 1 comporte également un opérateur 11 de combinaison du signal d'amplitude $|x|$ et du nombre N de codes numériques, ce nombre N correspondant, ainsi que mentionné précédemment, au nombre de valeurs de code numérique au moyen duquel le signal d'amplitude $|x|$ sera représenté sur une plage significative donnée, ainsi qu'il sera décrit ultérieurement dans la description. L'opérateur 11 de combinaison effectue en fait une soustraction, au signal d'amplitude $|x|$, d'un terme KN dont la valeur est donnée par la relation

$$KN = \frac{3}{\alpha} Log(N + 1)$$

L'opérateur de combinaison 11 délivre alors un signal d'amplitude codé normé, noté R sur la Figure 1a, en fonction du nombre N de codes numériques précité. On notera en particulier que l'opérateur 11 de combinaison peut, à cet effet, comporter une table de conversion 110 laquelle, à partir de la valeur N du nombre de codes, permet de délivrer le terme KN vérifiant la relation précédemment mentionnée. L'opérateur 11 de combinaison comporte en outre, ainsi que représenté en Figure 1a, un opérateur soustracteur, noté 111, lequel, sur un port d'entrée positive, reçoit la valeur du signal d'amplitude $|x|$ et, sur un port de soustraction, noté -, la valeur du terme KN précité. Le port de sortie de l'opérateur soustracteur 111 délivre le signal d'amplitude codé normé R.

Ainsi qu'on l'a en outre représenté en Figure 1a, le dispositif de quantification à débit de codage numérique variable selon l'invention comporte également un quantificateur 12 à seuil de quantification fixe, lequel reçoit le signal d'amplitude codé normé R délivré par l'opérateur 11 de combinaison précédemment décrit. Le quantificateur 12 à seuil de quantification fixe présente, conformément à un aspect particulièrement avantageux de la présente invention, des seuils de quantification dont la valeur Li est déterminée par la relation

$$ Li \ = \ -\frac{3}{\alpha} Log(2i \ + \ 1) $$

Dans la relation précitée, i désigne l'ordre des seuils de quantification du quantificateur 12 à seuils fixes. Le quantificateur 12 à seuils de quantification fixes délivre un signal d'amplitude quantifié codé, noté IM sur la Figure 1a, dont le débit de codage est fonction du nombre N de codes numériques ou niveaux de quantification.

On comprendra ainsi qu'au cours du fonctionnement de l'opérateur quantificateur tel que représenté en Figure 1a, la quantification du signal d'amplitude $|x|$ peut être effectuée quel que soit le nombre de codes N utilisés pour le codage du signal d'amplitude précité au moyen du quantificateur 12 à seuils de quantification fixes grâce au signal d'amplitude codé normé R en fonction du nombre N de codes numériques, le signal d'amplitude $|x|$ étant en quelque sorte adapté en fonction du nombre N de codes et, donc, de débit de codage correspondant, pour une quantification au moyen du quantificateur à seuil de quantification fixe 12, tel que représenté en Figure 1a.

Selon une caractéristique avantageuse de l'opérateur quantificateur tel que représenté en Figure 1a, le nombre de seuils de quantification du quantificateur 12 à seuils de quantification fixes est égal à Nmax/2-1, pour un nombre de codes maximum Nmax pair, le nombre N de codes pour assurer le codage du signal d'amplitude $|x|$ pouvant prendre des valeurs comprises entre 1 et Nmax. Bien entendu, on comprendra que, pour des raisons de simplification de codage, le nombre de codes pourra correspondre lui-même à un nombre pair. Un nombre impair de codes n'étant cependant pas exclu.

Selon une autre caractéristique avantageuse du dispositif de quantification objet de l'invention, pour une valeur donnée N du nombre de codes, ainsi que précédemment mentionné, les valeurs de seuil de quantification du dispositif de quantification et, donc, de l'opérateur de quantification 1 tel que représenté en Figure 1a vérifient la relation :

$$ xi \ = \ \frac{3}{\alpha} (Log \ (N \ + \ 1) \ - \ Log \ (2i \ + \ 1) \,) $$

La relation précitée donnant les valeurs de seuils de quantification de l'opérateur quantificateur 1 est vérifiée
- pour $1 \leqq i \leqq N/2$ si N est pair
- ou pour $1 \leqq i \leqq (N-1)/2$ si N est impair.

Bien entendu, afin de constituer un dispositif de quantification à débit de codage numérique variable conforme à l'objet de la présente invention, à un opérateur quantificateur, tel que représenté en Figure 1a, est associé un opérateur quantificateur-inverse, tel que représenté en Figure 1b, ces deux éléments constitutifs du dispositif de quantification objet de la présente invention pouvant, dans le cas le plus général, être délocalisés et séparés par des distances très importantes, plusieurs centaines de kilomètres, par une ligne de transmission de données numériques par exemple. Ils peuvent au contraire se trouver associés au sein d'un même appareil destiné à constituer par exemple un combiné téléphonique.

Ainsi qu'on l'a représenté en Figure 1b, le dispositif de quantification à débit de codage numérique variable selon la présente invention, afin d'assurer un décodage d'un signal d'amplitude quantifié codé noté IM, tel que délivré par l'opérateur quantificateur 1 représenté en Figure 1a à partir d'un signal numérique x satisfaisant aux conditions précédemment mentionnées, ce signal d'amplitude quantifié codé IM comprenant N codes numériques, comprend un opérateur quantificateur-inverse, noté 2, permettant d'assurer le décodage à débit de décodage numérique variable.

Ainsi qu'on l'a représenté sur la Figure 1b précitée, l'opérateur quantificateur inverse 2 comporte un quantificateur-inverse 20 à niveaux de quantification inverse Γi fixes. Le quantificateur-inverse 20 à niveau de quantification inverse Γi fixe reçoit, sur un port d'entrée, le signal d'amplitude quantifié codé IM.

Selon une caractéristique avantageuse du dispositif de quantification objet de l'invention, les niveaux de quantification inverse Γi vérifient la relation

$$\Gamma i = -\frac{3}{\alpha}\text{Log}(2i + 2)$$

Dans la relation précitée, i désigne l'ordre des niveaux de quantification inverse du quantificateur-inverse 20. Ce dernier délivre un signal d'amplitude décodé normé, noté IMDN, en fonction du nombre N de codes numériques ou niveaux de quantification.

De manière générale, on comprendra que le quantificateur inverse à niveaux de quantification fixes 20 permet, pour chaque code ou valeur de code du signal d'amplitude quantifié codé IM, de faire correspondre une valeur d'échantillon i numérisée correspondante pour un niveau de quantification inverse $\Gamma i$ donné dans une opération inverse à l'opération de quantification précédemment effectuée par le quantificateur à seuil de quantification fixe 12 de l'opérateur quantificateur 1 représenté en Figure 1a.

Ainsi qu'on l'a en outre représenté en Figure 1b, l'opérateur quantificateur inverse 2 comporte également un opérateur 21 de combinaison du signal d'amplitude décodé normé IMDN et du nombre N de codes numériques ou niveaux de quantification par addition d'un terme

$$KN = \frac{3}{\alpha}\text{Log}(N + 1)$$

L'opérateur de combinaison 21 délivre un signal d'amplitude $|y|$ décodé indépendant du nombre N de codes numériques ou niveaux de quantification. A cet effet, l'opérateur 21 de combinaison peut comprendre, ainsi que représenté en Figure 1b, une table de conversion 210 laquelle, à partir d'un signal représentant le nombre N de codes reçus à un port d'entrée, délivre le terme KN précité, la table de conversion 210 étant, de manière analogue à la table de conversion 110 de l'opérateur 11 de combinaison de l'opérateur quantificateur 1 de la Figure 1a, constituée par exemple par un circuit de mémoire lequel, aux valeurs d'entrée N précitées, fait correspondre les valeurs précalculées du terme KN.

En outre, ainsi que représenté sur cette même Figure 1b, l'opérateur quantificateur inverse 2 comporte enfin un opérateur 22 de combinaison du signal d'amplitude $|y|$ décodé et du signal de signe IS transmis à partir de l'opérateur quantificateur 1 par la ligne de transmission à l'opérateur quantificateur inverse 2. L'opérateur 22 de combinaison du signal d'amplitude décodé et du signal de signe IS permet de délivrer un signal numérique reconstitué y correspondant au signal numérique x d'origine. On comprendra bien sûr que l'opérateur 22 de combinaison du signal d'amplitude y décodé et du signal de signe IS peut être constitué par un circuit numérique permettant d'assurer la concaténation des bits du mot représentatif du signal d'amplitude décodé $|y|$ et du signal de signe Is pour engendrer un mot signé représentatif du signal numérique reconstitué y.

Selon une caractéristique de l'opérateur quantificateur inverse 2 tel que représenté en Figure 1b, le nombre de niveaux de quantification inverse à niveau fixe du quantificateur-inverse 20 est égal à Nmax/2 pour un nombre de codes numériques maximum Nmax pair.

Selon une caractéristique avantageuse du dispositif de quantification objet de l'invention, les niveaux de quantification inverse de l'opérateur de quantification inverse 2 vérifient la relation

$$yi = \frac{3}{\alpha}(\text{Log}(N + 1) - \text{Log}(2i + 2))$$

où i désigne l'ordre des niveaux de quantification inverse
- pour $1 \leq i \leq N/2-1$ si N est pair,
- ou pour $1 \leq i \leq (N-1)/2$ si N est impair.

Bien entendu, on comprendra qu'à un niveau de seuil de quantification Li du quantificateur fixe 12 de l'opérateur quantificateur 1 correspond un niveau de quantification inverse $\Gamma i$ du quantificateur inverse fixe 20 et qu'à un niveau de seuil de quantification xi de l'opérateur quantificateur 1 correspond un niveau de quantification inverse $y_i$ de l'opérateur quantificateur-inverse 2 en fonction du nombre N de codes ou de niveaux de quantification.

On notera également que, pour une valeur donnée N du nombre de codes ou niveaux de quantification précitée, ce nombre N étant compris entre la valeur 1 et la valeur Nmax précédemment mentionnée, $1 \leq N \leq$ Nmax, le signal d'amplitude quantifié codé noté IM vérifie la relation
- pour N pair, $D_N \leq IM \leq D_N + N/2 -1$
- et pour N impair, $D_N \leq IM \leq D_N + (N-1)/2$.

Dans les relations précédentes, le terme $D_N$ représente une valeur minimale de IM, laquelle constitue une valeur de code ou un code particulier pour un ensemble de valeurs déterminées du signal x.

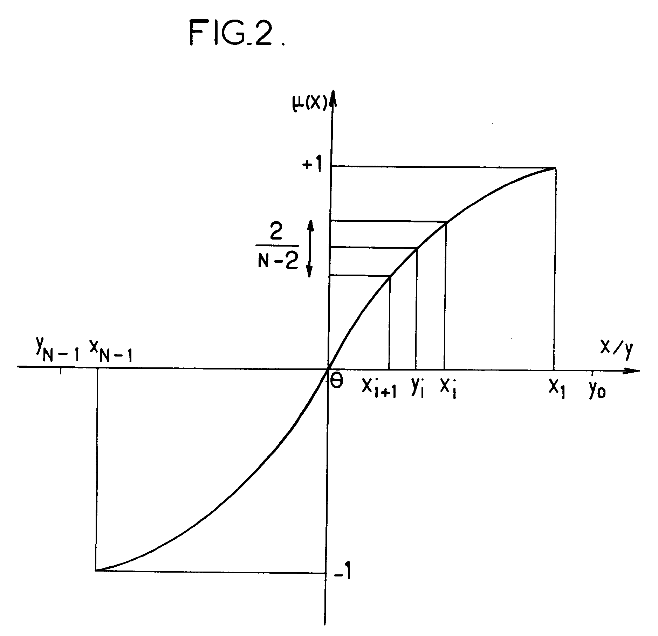

Une justification des valeurs des paramètres de l'opérateur quantificateur 1 et de l'opérateur quantificateur-inverse 2 constitutif du dispositif de quantification à débit de codage numérique variable objet de l'invention sera maintenant donnée en liaison avec la Figure 2.

Sur la Figure 2, on a représenté la fonction caractéristique d'un quantificateur au sens général.

Le quantificateur est dit optimisé lorsque la fonction caractéristique de ce dernier permet de rendre minimum le bruit de quantification, à un seuil de quantification noté xi correspondant de manière générale un niveau de quantification inverse noté $y_i$ différent, cette différence étant génératrice du bruit de quantification.

La densité de probabilité du signal x à l'entrée du quantificateur étant notée p(x), le nombre N des valeurs de seuil de quantification xi et de niveaux de quantification inverse yi ayant été défini précédemment, l'intervalle de quantification numéro i est compris entre les valeurs de seuil de quantification $x_i$+1 $x_i$ et la fonction caractéristique du quantificateur est notée $\mu(x)$.

Le quantificateur est supposé symétrique par rapport à l'origine O.

Les N intervalles de quantification d'ordre i, i variant de 0 à N-1, sont définis par ]$-\infty$ $x_{n-1}$], [$x_{n-1}$ $X_{n-2}$],... [x2 x1], [x1 $+\infty$[.

Aux N-1 seuils de quantification compris entre x1 et $x_{n-1}$, la fonction caractéristique fait correspondre N-1 points notés $\mu(xi)$ régulièrement répartis sur l'axe $\mu(x)$. Par définition, pour un quantificateur à seuil fixe
$\mu(x_{n-1})$ = -1 et
$\mu(x1)$ = +1 en raison de la symétrie.

La fonction caractéristique comprend trois parties
$$] - \infty\, x_{n-1}], [x_{n-1}\, x1], [x1\, +\infty[$$

Au segment [$x_{N-1}$ x1] des seuils de quantification correspond, sur la fonction caractéristiques, le segment [-1+1] comportant N-2 intervalles de quantification pour lesquels on a les relations :

$$\mu(x_i) - \mu(x_{i+1}) = \frac{2}{N-2} \quad (1)$$

$$\mu(x_i) = 1 - 2\frac{i-1}{N-2} \quad (2)$$

Pour un grand nombre d'intervalles de quantification, la densité de probabilité p(x) sur chaque intervalle de quantification est supposée constante et le niveau de quantification inverse optimum yi, pour l'intervalle i de quantification, vérifie la relation :

$$y_i = (x_{i+1} + x_i)/2 \quad (3)$$

La fonction caractéristique étant linéarisée sur chaque intervalle de quantification, on peut alors écrire :

$$\mu(y_i) = \mu(x_i) - 1/(N-2) \quad (4)$$

Pour le segment de quantification $x_{n-1}$ x1, la puissance du bruit de quantification vérifie la relation :

$$Q[x_{n-1}\ x_1] = \sum_{i=1}^{N-2} p(y_i)\ q_i^3\ /12 \qquad (5)$$

avec :

$$q_i = x_i - x_{i+1} \quad (6)$$

Compte tenu des segments de quantification ]$-\infty$ $x_n$-1] et [x1 $+\infty$[, le bruit de quantification total est donné par la relation (7), la contribution au bruit de quantification total des segments de quantification [x1 $+\infty$] et [$-\infty$ $x_{n-1}$] étant supposée identique :

$$Q = \sum_{i=1}^{N-2} p(y_i)\ q_i^3\ /12 + 2 \int_{x1}^{+\infty} (u-y_0)^2\ p(u)\ du \qquad (7)$$

Le calcul des paramètres du quantificateur, c'est-à-dire des niveaux de seuil de quantification $x_i$ et des niveaux de quantification inverse $y_i$, consiste à rendre minimale la puissance du bruit de quantification Q précédemment définie.

Pour

$$\theta_i = p(y_i)^{1/3}q_i \quad (8)$$

la puissance du bruit de quantification s'écrit :

$$Q(\theta_1, x_1, y_0) = \frac{1}{12} \left( \sum_{i=1}^{N-2} \theta_i^3 \right) + 2 \int_{x_1}^{+\infty} (u-y_0)^2 \, p(u) \, du \quad (9)$$

Les paramètres $\theta_i$ et $x_1$, compte tenu des considérations de symétrie de la fonction caractéristique, sont liés par la relation de contrainte

$$\sum_{i=1}^{N-2} \theta_i = 2 \, C_1 = 2 \int_0^{x_1} p(u)^{1/3} \, du \quad (10)$$

avec

$$C_1 = \int_0^{x_1} p(u)^{1/3} \, du \quad (11)$$

Compte tenu des relations 11 et 10 précitées la relation de contrainte s'écrit

$$F(\theta_i, x_1) = \left( \sum_{i=1}^{N-2} \theta_i \right) + \int_{x_1}^{+\infty} p(u)^{1/3} \, du \, -2C = 0 \quad (12)$$

avec

$$C = \int_0^{+\infty} p(u)^{1/3} \, du \quad (13)$$

Le problème consistant à minimiser la puissance de bruit de quantification Q est alors ramené à un problème d'optimisation avec contrainte. Une résolution conformément au théorème de Lagrange pour une solution Q $(\theta_i, x_1, y_0)$ est obtenue pour une annulation de la différentielle de

$$J = Q(\theta_i, x_1, y_0) - \beta \, F(\theta_i, x_1)$$

L'annulation de la dérivée partielle de J par rapport à $\theta_i$ puis par rapport à $y_1$ et $x_0$ permet successivement d'obtenir

$$\beta = \frac{C_1^2}{(N-2)^2} \quad (14)$$

$$\theta_i = \frac{2C_1}{(N-2)} \quad (15)$$

$$q_i = \frac{2}{N-2} \frac{C_1}{p(y_i)^{1/3}} \quad (16)$$

$$y_0 - x_1 = \frac{1}{N-2} * \frac{C_1}{p(x_1)^{1/3}} \quad (17)$$

$$Y_0 = \frac{\int_{x_1}^{+\infty} u \, p(u) \, du}{\int_{x_1}^{+\infty} p(u) \, du} \qquad (18)$$

La fonction caractéristique $\mu(x)$ étant linéarisée sur l'intervalle de quantification $[x_{i+1} \, x_i]$ l'expression de la dérivée de la fonction caractéristique par rapport à x peu être obtenue à partir de la relation (16) et la fonction caractéristique $\mu(x)$ obtenue par intégration vérifie la relation:

$$\mu(x) = \frac{\int_0^x p(u)^{1/3} \, du}{C_1} \qquad (19)$$

Les valeurs des seuils de quantification $x_i$ et les niveaux de quantification $y_i$ peuvent alors à partir de la relation (19) précitée et des relations (2) et (4) précédentes être calculés et vérifient les relations respectivement

$$\frac{\int_0^{x_1} p(u)^{1/3} \, du}{C_1} = \frac{(N-2) - 2(i-1)}{(N-2)} \quad 1 \leqslant i \leqslant N-1 \qquad (20)$$

$$\frac{\int_0^{y_1} p(u)^{1/3} \, du}{C_1} = \frac{(N-3) - 2(i-1)}{(N-2)} \quad 1 \leqslant i \leqslant N-2 \qquad (21)$$

Pour une densité de probabilité p(x) du signal numérique d'entrée donné, les relations (11), (17) et (18) permettent de déterminer $x_1$ borne des seuils de quantification et $y_0$ borne du niveau de quantification.

Les relations (20) et (21) précédemment mentionnées permettent alors de calculer les autres seuils et niveaux de quantification.

Pour une densité de probabilité p(x) donnée par une fonction de Laplace ainsi que décrit précédemment, une valeur remarquable en ce qui concerne les signaux de parole ou de son pour le paramètre $\alpha$ est $\alpha = \sqrt{2}$.

Le remplacement par l'expression de cette densité de probabilité dans la relation (11) donne la valeur de $C_1$ ci-après :

$$C_1 = \left(\frac{\alpha}{2}\right)^{1/3} \frac{3}{\alpha}(1 - e^{-\alpha/3 \, x_1}) \quad (22)$$

De la même manière la valeur de la densité de probabilité p(x) dans la relation (18) permet d'obtenir la valeur de $y_0$ borne des niveaux de quantification :

$$y_0 = x_1 + \frac{1}{\alpha} \quad (23)$$

Le calcul de $x_1$ borne des valeurs des seuils de quantification peut alors être obtenu à partir des relations (17) (22) et (23) la valeur de $x_1$ étant donnée par la relation :

$$x_1 = \frac{3}{\alpha} \text{Log} \left(1 + \frac{N-2}{3}\right) \quad (24)$$

Le calcul de la fonction caractéristique $\mu(x)$ pour $xi \geq 0$ peut alors être effectué à partir de l'expression de la densité de probabilité précédemment mentionnée et des relations précédentes (19) et (22). La fonction caractéristique $\mu(x)$ s'écrit :

$$\mu(x) = \frac{N+1}{N-2}(1 - e^{-\alpha/3x}) \quad (25)$$

Les seuils de quantification et la valeur de ces derniers $x_i$ pour $x_i \geq 0$ peuvent être établis à partir des relations (2) et (25) précitées, la valeur des seuils de quantification vérifiant la relation :

$$x_i = \frac{3}{\alpha}(\text{Log } (N+1) - \text{Log } (2i+1))$$

$$\text{pour } 1 \leqslant i \leqslant N/2 \qquad \text{si } N \text{ pair} \qquad\qquad (26)$$
$$\qquad 1 \leqslant i \leqslant (N-1)/2 \qquad \text{si } N \text{ impair}$$

De la même façon, les niveaux de quantification inverse $y_i$ pour $y_i \geq 0$ peuvent être calculés à partir des relations (2) (4) et (25) précédentes, les niveaux de quantification inverse vérifiant la relation :

$$y_i = \frac{3}{\alpha}(\text{Log } (N+1) - \text{Log } (2i+2))$$

$$\text{pour } 0 \leqslant i \leqslant N/2 -1 \qquad \text{si } N \text{ pair} \qquad\qquad (27)$$
$$\qquad 0 \leqslant i \leqslant (N-1)/2 \qquad \text{si } N \text{ impair}$$

On notera en particulier que l'expression des niveaux de quantification inverse $y_i$ précités permet pour i=0 de calculer une bonne approximation de la valeur $y_0$ calculée précédemment.

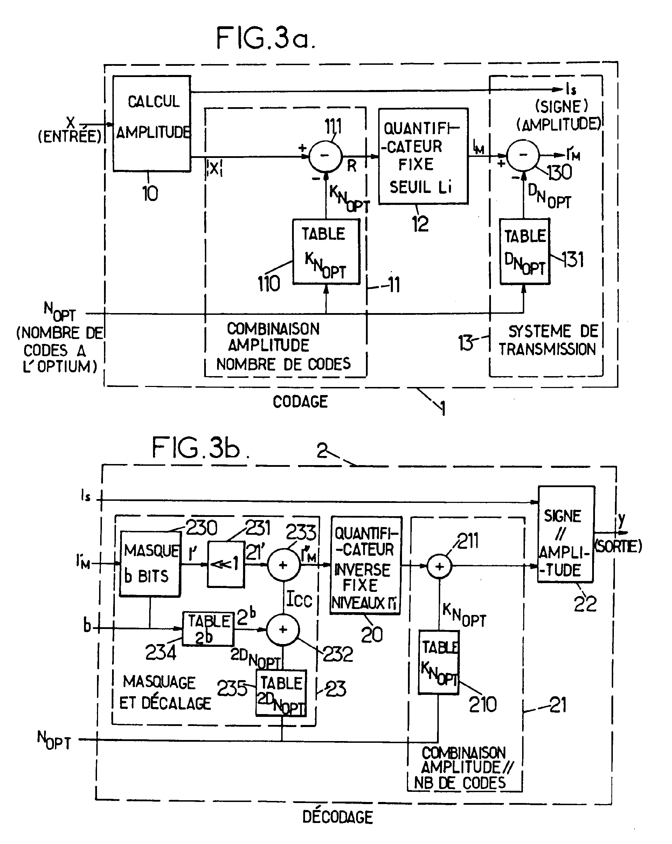

Une description plus détaillée d'un dispositif de quantification à débit de codage numérique variable conforme à l'objet de la présente invention, plus particulièrement destiné à la mise en oeuvre de codes imbriqués, sera maintenant donnée en liaison avec les figures 3a et 3b.

Sur les figures précitées les mêmes références représentent les mêmes éléments que dans le cas des figures 1a et 1b.

A titre de simple rappel illustratif, on rappelle que le principe de la technique des codes imbriqués est d'utiliser, au décodage, une série de quantificateurs-inverses déduits du quantificateur du codeur ou opérateur quantificateur par troncation du code transmis I. Ainsi, si $N_{min}$ est le nombre de codes et de niveaux minimum, les nombres de niveaux des quantificateurs inverses sont de la forme $N_{min}.2^k$.

On rappellera simplement que dans le cas où le nombre minium $N_{min}$ de codes et de niveaux est impair, le passage du quantificateur à $2N_{min}$ codes au quantificateur à $N_{min}$ codes par troncation du code I est rendu correct par la numérotation des intervalles de quantification laquelle commence par I=0 pour les amplitudes les plus élevées du signal à quantifier.

Dans le cas de la quantification d'un signal non uniforme, c'est-à-dire d'un signal numérique tel que le signal x pour lequel la densité de probabilité d'amplitude obéit à une loi du type loi de Laplace, la fonction caractéristique $\mu(x)$ calculée précédemment permet d'appliquer une méthode analogue à celle suivie pour un quantificateur uniforme en opérant sur les valeurs de $\mu(x)$ ou sur les valeurs de i d'après la relation (2).

On établit ainsi la fonction caractéristique d'un quantificateur optimum présentant un bruit de quantification optimisé $Q_{OPT}$ comportant $N_{OPT}$ codes.

On peut ainsi déduire différents quantificateurs uniformes selon l'axe des $\mu$, ou selon l'axe des i, représentatifs de l'ordre des seuils de quantification en divisant les intervalles de quantification de la fonction caractéristique $[\mu(x_{i+1}) \mu(x_i)]$ par $2xN_{OPT}$ ou $4xN_{OPT}$ nombres de codes par exemple ou en regroupant ces intervalles par 2, 4 ou plus nombres de codes inférieurs au nombre optimal de codes $N_{OPT}$. Les seuils et niveaux des quantificateurs selon l'axe des x, c'est-à-dire les paramètres $x_i$ et $y_i$, sont déterminés comme image inverse des quantificateurs uniformes par la fonction caractéristique $\mu(x)$. On notera cependant que seul le quantificateur $Q_{OPT}$ est optimum.

Selon le dispositif de quantification à débit de codage numérique variable objet de l'invention, dans le cas où un tel dispositif est utilisé pour le codage et le décodage selon la technique des codes imbriqués, ainsi que représentés en figure 3a et 3b et contrairement aux dispositifs de l'art antérieur lesquels utilisent un quantificateur inverse spécifique à niveau de quantification inverse fixe pour chaque valeur b du nombre de bits de poids faible masqués, le dispositif selon l'invention utilise un opérateur quantificateur permettant d'assurer un codage avec un nombre maximum de codes selon les contraintes de débit alors que l'opérateur quantificateur-inverse, conformément à l'objet de la présente invention, n'utilise qu'un seul quantificateur inverse à niveau de quantification fixe et permet cependant de commander le nombre de codes notés $N_{OPT}$ de la configuration pour $b=b_{OPT}$ correspondant au nombre de bits masqués correspondant aux performances obtimales de transmission.

Ainsi qu'on l'a représenté en figure 3a, dans le cas où un signal d'amplitude quantifié codé, noté $I'_M$, est engendré selon un code imbriqué sur un nombre de codes optimum $N_{OPT}$, l'opérateur quantificateur 1 comporte en outre un module opérateur noté 13 permettant la modification des bits de poids faible du signal d'amplitude quantifié codé $I'_M$ au cours de la transmission du code. Le module opérateur 13 est donc connecté en cascade avec l'opérateur quantificateur précédemment décrit en liaison avec l'opérateur quantificateur 1 ou peut être simplement associé à celui-ci. Selon une caractéristique avantageuse du dispositif de quantification objet de l'invention tel que représenté en figure 3a, le calcul de la quantité I'M, dont les b bits de poids faible peuvent être modifiés au cours de la transmission, est effectué par le module opérateur 13 par soustraction au signal quantifié codé IM, délivré par le quantificateur à seuil fixe 12, d'une quantité notée $D_{NOPT}$ correspondant au nombre de codes $N_{OPT}$. La quantité notée $D_{NOPT}$ sera de préférence choisie égale à la valeur minimum du code IM pour le nombre de codes $N_{OPT}$.

On comprendra ainsi qu'au codage l'opérateur quantificateur 1 a pour entrée le signal numérique x et le nombre de codes à l'optimum $N_{OPT}$ et pour sortie le signal de signe IS et le signal d'amplitude quantifié codé I'M correspondant au signal d'amplitude quantifié codé IM auquel a été retranchée la quantité $D_{NOPT}$. Le retrait de la quantité précitée indique ainsi que la modification des bits de poids faible par le système de transmission doit être effectuée sur la quantité $I'_M$.

On comprendra qu'en liaison avec le fonctionnement de l'opérateur quantificateur tel que représenté en figure 1a dans le cas général, en l'absence de codes imbriqués, pour une valeur de nombre de codes donnée $N_{OPT}$ comprise entre 1 et $N_{OPT}$ max le signal d'amplitude quantifiée codé IM vérifie la relation :

$$\text{si } 2^{b_{OPT}}N \text{ pair,} \qquad D_{NOPT} \leqq I_M \leqq D_{NOPT} + 2b^{OPT}N_{OPT}/2 - 1 \qquad (28)$$
$$\text{si } 2^{b_{OPT}}N \text{ impair,} \qquad D_{NOPT} \leqq I_M \leqq D_{NOPT} + (2^{b_{OPT}}N_{OPT} - 1)/2$$

Ainsi qu'on le notera à l'observation de la figure 3a, le module opérateur 13 peut comporter avantageusement un opérateur soustracteur, noté 130, recevant sur un port d'entrée positif le signal d'amplitude quantifié codé IM délivré par le quantificateur à seuil de quantification fixe 12 et sur un port d'entrée négatif de soustraction la quantité $D_{NOPT}$ elle-même délivrée par l'intermédiaire d'une table de conversion 131 recevant, en entrée, la valeur $N_{OPT}$ du nombre de codes à l'optimum. L'opérateur soustracteur 130 délivre le signal quantifié codé $I'_M$ adapté au code imbriqué.

Ainsi qu'on l'a en outre représenté en figure 3b, le dispositif de quantification, en vue de recevoir un signal d'amplitude quantifiée codé $I'_M$ selon un code imbriqué sur un nombre de codes numériques optimum $N_{OPT}$ comportant un nombre b de bits de poids faible modifiés, comporte, outre l'opérateur quantificateur-inverse 2, en amont du quantificateur-inverse 20 à niveaux de quantification inverse fixes, un module de masquage 23 des b bits modifiés et de décalage des bits du signal d'amplitude quantifié codé $I'_M$ selon le code imbriqué. Le module de masquage 23 permet d'engendrer un signal d'amplitude quantifiée codé restitué noté $I''_M$ appliqué à l'entrée du quantificateur inverse 20 à niveau de quantification inverse fixe.

Ainsi, l'opérateur quantificateur inverse 2 tel que représenté en figure 3b a pour entrée le signal de signe $I_S$, le signal d'amplitude quantifié codé $I'_M$ le nombre de bits de poids faible devenu non significatifs b et le nombre de codes du quantificateur optimum $N_{OPT}$. Il délivre par contre le signal restitué y correspondant au signal numériquze x d'entrée de l'opérateur quantificateur représenté en figure 3a.

Ainsi qu'on l'a représenté en figure 3b, le module de masquage 23 et de décalage des bits comporte un élément 230 d'inscription de bits de valeur déterminée sur les b bits de poids faible du signal d'amplitude quantifié codé $I'_M$ selon un code imbriqué de façon à engendrer un signal quantifié codé masqué I'. A titre d'exemple non limitatif les bits de valeur déterminée peuvent avoir la valeur zéro et l'élément d'inscription pouvant par exemple être constitué par une mémoire adressable en lecture et en écriture.

En outre, le module 23 de masquage et de décalage de bits comporte un élément de décalage binaire de 1 bit à gauche du signal quantifié codé masqué I' pour engendrer un signal quantifié codé masqué double, noté 2I'. L'élément 231 de décalage binaire peut être constitué par exemple par un registre du type registre à décalage.

En outre, un premier élément additionneur 232 est prévu afin d'effectuer la sommation d'une première valeur $2^b$ où b représente le nombre de bits effectivement masqués du fait du codage imbriqué, cette valeur $2^b$ étant par exemple délivrée par une table de conversion 234 laquelle reçoit la valeur b du nombre de bits effectivement masqués et d'une deuxième valeur $2D_{NOPT}$ correspondant au nombre de codes $N_{OPT}$ et permettant la modification des bits de poids faible au cours de la transmission. Le premier élément additionneur 232 permet d'engendrer un signal codé de correction noté ICC de valeur $2^b+2D_{NOPT}$.

Le module de masquage 23 comporte enfin un deuxième élément additionneur 233 permettant d'assurer la sommation du signal quantifié codé masqué double noté 2I' et du signal codé de correction ICC délivré par le premier élément additionneur 232. Le deuxième élément additionneur 233 permet d'engendrer le signal d'amplitude quantifié codé $I''_M$ appliqué à l'entrée du quantificateur inverse 20.

Le fonctionnement des parties correspondantes de l'opérateur quantificateur 2 représenté en figure 3b en aval de l'opérateur de masquage et de décalage de bits est alors identique au fonctionnement de l'opérateur quantificateur inverse 2 représenté en figure 1b, au signal d'amplitude quantifié codé $I_M$ étant substitué le signal d'amplitude quantifié codé restitué $I''_M$ précédemment décrit.

Ainsi, la configuration du dispositif de quantification dans le cas de signaux codés imbriqués dépend de la valeur de deux entrées, le nombre de codes $N_{OPT}$ et le nombre de bits masqués b. Les performances du dispositif de quantification sont optimales lorsque le nombre de bits masqués b est égal au nombre de bits masqués optimum, $b=b_{OPT}$ et dans ce cas le nombre de codes du dispositif de quantification est bien entendu égal à $N=N_{OPT}$. Dans le cas général le nombre de codes du dispositif de quantification est $N=2^{(bOPT-b)} \times N_{OPT}$. Dans le cas où aucun bit n'est masqué par la ligne de transmission, c'est-à-dire pour b=0, le nombre de codes est ainsi $N=2^{bOPT} \times N_{OPT}$.

On comprendra bien entendu que les paramètres de valeurs de seuil de quantification $x_i$ et de niveau de quantification inverse $y_i$ du dispositif de quantification pour signal de codes imbriqués conformément à l'objet de la présente invention, tel que représenté en figure 3a et 3b, peuvent de manière analogue au calcul précédent relativement au dispositif de quantification tel que représenté en figure 1a et 1b en l'absence de codes imbriqués, être calculés de la manière ci-après. Le nombre maximum de codes pour b=0 nombre de bits masqués par le système de transmission est égal à $N=2^{bOPT} \times N_{OPT}$, ce nombre maximum de codes correspondant au nombre de codes du dispositif de quantification au niveau de l'opérateur de quantification. Cet opérateur de quantification est obtenu en divisant chaque intervalle [i+1i] d'un opérateur quantificateur noté $Q_{OPT}$ en $2^{bOPT}$ intervalles de quantification.

La relation (26) donnant la valeur des seuils de quantification $x_i$ s'écrit alors :

$$x_i = \frac{3}{\alpha}(Log(N_{OPT} + 1) - Log(2\frac{i}{2^{bOPT}} + 1) \quad (29)$$

Les valeurs de seuil de quantification $x_i$ pour l'opérateur quantificateur optimum précités s'écrivent alors :

$$x_i = \frac{3}{\alpha}(Log(2^{bOPT}N_{OPT} + 2^{bOPT}) - Log(2i + 2^{bOPT}))$$

$$\text{pour } 1 \leq i \leq 2^{bOPT-1} N_{OPT} \quad (30)$$

Le remplacement des b bits de poids faible du code I par des bits de valeurs déterminées telles que les valeurs 0 pour une valeur b comprise entre 0 et $b_{max}$, $0 \leq b \leq b_{max}$, permet d'obtenir en fait $b_{max+1}$ quantificateurs notés $Q_b$ ayant chacun $2^{bOPT-b} \times N_{OPT}$ codes, ce dernier nombre devant nécessairement correspondre à une valeur entière.

Si J est le code obtenu à partir du code I après troncation de b bits, les seuils de quantification xj d'ordre j de chaque opérateur quantificateur $Q_b$ correspondant se déduisent de la relation (30) en remplaçant i par la valeur $2^b.j$ et vérifient la relation :

$$x_2b_j = \frac{3}{\alpha} - (Log (2b^{OPT}N_{OPT} + 2^{bOPT}) - Log(2^{b+1}j + 2^{bOPT}))$$

$$\text{pour } 1 \leq j \leq 2^{bOPT-b-1} N_{OPT} \quad (31)$$

Bien entendu cette série d'opérateurs quantificateurs $Q_b$ comprend l'opérateur quantificateur optimum $Q_{OPT}$ pour $b=b_{OPT}$. On notera bien entendu que les performances des opérateurs quantificateurs $Q_b$ se dégradent d'autant plus que b s'écarte de la valeur $b_{OPT}$.

Pour un opérateur quantificateur $Q_b$ précédemment défini par ces niveaux de seuils de quantification on peut obtenir la valeur des niveaux de quantification $y_i$ de l'opérateur quantificateur inverse, avec à nouveau $i=2^b.j$ en écrivant, par exemple, que la fonction caractéristique pour le niveau de quantification $y_i$ soit $\mu(y_i)$ est le milieu de l'intervalle de quantification $[\mu(x_{i+1}) \mu(x_i)]$, soit en remplaçant j par j+1/2 dans la relation (31) précitée.

Les niveaux de quantification inverse $y_i$ du quantificateur-inverse $Q_b$ vérifient alors la relation :

$$y_i = \frac{3}{\alpha}(\text{Log}(2^{bOPT}N_{OPT} + 2^{bOPT}) - \text{Log}(2i + 2^b + 2^{bOPT}))$$

$$\text{avec } i = 2^b j, \qquad 0 \leqq j \leqq 2^{bOPT - b - 1}N_{OPT} - 1 \quad (32)$$

Les paramètres du dispositif de quantification a débit variable avec code imbriqué conformément à l'objet de la présente invention sont alors totalement définis par les valeurs ci-après :

$$K_{NOPT} = 3/\alpha \, \text{Log}(2^{bOPT} \, N_{OPT} + 2^{bOPT}) \quad (33)$$

$$D_{NOPT} = 0$$

$$L_i = - 3/\alpha \, \text{Log}(2i + 2^{bOPT})$$

$$\text{pour } 1 \leqq i \leqq 2^{bOPT - 1} \, N_{OPTmax} - 1$$

$$\Gamma_i = - 3/\alpha \, \text{Log}(i + 2^{bOPT})$$

$$\text{pour } 1 \leqq i \leqq 2^{bOPT} N_{OPTmax}$$

$N_{OPTmax}$ est la valeur maximum de $N_{OPT}$.

Le tableau donné ci-après dans la description permet de comparer les performances du dispositif de quantification à débit de codage numérique variable objet de la présente invention aux performances d'un jeu de quantificateurs fixes optimisés correspondant à un nombre de codes ou de niveaux de quantification paire variant de 2 à 128, ces quantificateurs fixes optimisés étant définis conformément à la méthode décrite dans l'article de Joël Max précédemment mentionné dans la description.

Dans le tableau précité on a d'une part porté en colonne 1 le nombre de niveaux de quantification ou de codes et dans la colonne 2 et 3 respectivement le rapport signal à bruit en dB pour le quantificateur optimum correspondant et pour le quantificateur à débit variable objet de la présente invention.

| Nombre de Niveaux | Rapport signal à bruit (dB) | |
|:---:|:---:|:---:|
| | Optimum | Débit variable |
| 2 | 3.02 | 2.82 |
| 4 | 7.55 | 7.34 |
| 8 | 12.64 | 12.50 |
| 16 | 18.14 | 18.05 |
| 32 | 23.88 | 23.83 |
| 64 | 29.75 | 29.72 |
| 128 | 35.69 | 35.68 |

Le tableau précité montre que le dispositif de quantification à débit variable objet de la présente invention permet d'obtenir des performances très proches de l'optimum théorique, ce d'autant plus que le nombre de niveaux de quantification ou de codes est élevé.

## Revendications

1. Dispositif de quantification à débit de codage numérique variable, en fonction du nombre N de codes numériques ou niveaux de quantification, d'un signal numérique à répartition d'amplitude selon une loi de densité de probabilité p(x) du type loi de Laplace, $p(x) = \alpha/2 \, e^{-\alpha|x|}$, où $|x|$ représente l'amplitude du signal, sur un intervalle de fonctionnement symétrique [-xmax, + xmax], caractérisé en ce que ce dispositif comprend un opérateur quantificateur (1) comportant :
   - un opérateur (10) de calcul d'un signal d'amplitude $|x|$ et d'un signal de signe (IS) dudit signal numérique,

- un opérateur (11) de combinaison du signal d'amplitude $|x|$ et du nombre N de codes numériques par soustraction d'un terme $K_N = 3/\alpha \, Log(N+1)$, cet opérateur délivrant un signal d'amplitude codé normé (R), en fonction du nombre N de codes numériques,
- un quantificateur (12) à seuils de quantification fixes, dont la valeur des seuils Li est déterminée par la relation :

$$Li = -\frac{3}{\alpha} Log \, (2i + 1)$$

où i désigne l'ordre des seuils de quantification, ledit quantificateur à seuils fixes recevant ledit signal d'amplitude codé normé (R) et délivrant un signal d'amplitude quantifié codé (IM) à débit de codage fonction du nombre N de codes numériques ou niveaux de quantification.

2. Dispositif selon la revendication 1, caractérisé en ce que le nombre de seuils de quantification du quantificateur (12) à seuils fixes est égal à Nmax/2 - 1 pour un nombre de codes maximum Nmax pair.

3. Dispositif selon l'une des revendications précédentes, caractérisé en ce que, pour une valeur donnée N du nombre de codes, les valeurs de seuil de quantification de ce dispositif vérifient la relation :

$$xi = \frac{3}{\alpha} (Log \, (N + 1) \, - \, Log \, (2i + 1) \, )$$

pour $1 \leqq i \leqq N/2$      si N est pair
ou pour $1 \leqq i \leqq (N-1)/2$      si N est impair.

4. Dispositif de quantification à débit de codage numérique variable, en fonction du nombre N de codes numériques ou niveaux de quantification d'un signal d'amplitude quantifié codé (IM), à partir d'un signal numérique (x) à répartition d'amplitude selon une loi de densité de probabilité p(x) du type loi de Laplace, $p(x) = \alpha/2 \, e^{-\alpha|x|}$, où $|x|$ représente l'amplitude du signal numérique sur un intervalle d'amplitude symétrique [-xm, + xm], le signal d'amplitude quantifié codé (IM) comportant N codes numériques, caractérisé en ce que ce dispositif comprend un opérateur quantificateur - inverse (2) comportant :
   - un quantificateur-inverse (20) à niveaux de quantification inverse $\Gamma i$ fixes, dont la valeur est donnée par la relation :

$$\Gamma i = -\frac{3}{\alpha} Log \, (2i \, + \, 2)$$

où i désigne l'ordre des niveaux de quantification inverse, ledit quantificateur inverse à niveaux fixes recevant ledit signal d'amplitude quantifié codé (IM) et délivrant un signal d'amplitude décodé normé (IMDN) en fonction du nombre N de codes numériques ou niveaux de quantification,
   - un opérateur (21) de combinaison du signal d'amplitude décodé normé (IMDN) et du nombre N de codes numériques ou niveaux de quantification par addition d'un terme $K_N = 3/\alpha \, Log \, (N+1)$, cet opérateur de combinaison délivrant un signal d'amplitude $|y|$ décodé indépendant du nombre N de codes numériques ou niveaux de quantification,
   - un opérateur (22) de combinaison dudit signal d'amplitude $|y|$ décodé et d'un signal de signe (IS) permettant de délivrer un signal numérique reconstitué y correspondant au signal numérique x.

5. Dispositif selon la revendication 4, caractérisé en ce que le nombre de niveaux de quantification inverse du quantificateur inverse à niveaux fixes est égal à Nmax/2 pour un nombre de codes numériques maximum Nmax pair.

6. Dispositif selon l'une des revendications 4 ou 5, caractérisé en ce que les niveaux de quantification inverse dudit opérateur de quantification inverse vérifient la relation :

$$yi = \frac{3}{\alpha} (Log \, (N + 1) \, - \, Log \, (2i + 2) \, )$$

pour
$1 \leqq i \leqq N/2 - 1$      si N est pair,
$1 \leqq i \leqq (N-1)/2$      si N est impair.

7. Dispositif selon l'une des revendications précédentes, caractérisé en ce que, pour une valeur donnée N du nombre de codes ou niveaux de quantification, avec $1 \leqq N \leqq Nmax$, le signal d'amplitude quantifié codé IM vérifie la relation :
pour N pair          $D_N \leqq IM \leqq D_N + N/2 - 1$
pour N impair       $D_N \leqq IM \leqq D_N + (N-1)/2$
où $D_N$ représente une valeur minimale de IM.

8. Dispositif de quantification selon l'une des revendications 1 à 3, caractérisé en ce que, en vue d'engendrer un signal d'amplitude quantifié codé supportant un code imbriqué sur un nombre de codes optimum $N_{OPT}$ et dont les bits de poids faible peuvent être modifiés durant la transmission, ledit opérateur quantificateur comporte en outre un module opérateur de modification du signal d'amplitude quantifié codé pour engendrer ledit signal d'amplitude quantifié codé supportant le code imbriqué, la modification étant effectuée par soustraction au signal d'amplitude quantifié codé d'une quantité $D_{NOPT}$ correspondant au nombre de codes optimum $N_{OPT}$.

9. Dispositif de quantification selon l'une des revendications 4 à 8, caractérisé en ce que, en vue de recevoir un signal d'amplitude quantifié codé supportant un code imbriqué sur un nombre de codes numériques optimum, $N_{OPT}$, comportant un nombre b de bits de poids faible modifiés, ledit opérateur quantificateur inverse comporte en outre, en amont dudit quantificateur inverse à niveaux de quantification inverse fixes, un module de masquage des b bits modifiés et de décalage des bits du signal d'amplitude quantifié codé supportant le code imbriqué pour engendrer un signal d'amplitude quantifié codé restitué appliqué à l'entrée du quantificateur inverse à niveaux de quantification inverse fixes.

10. Dispositif de quantification inverse selon la revendication 9, caractérisé en ce que ledit module de masquage et de décalage comporte :
   - un élément d'inscription de bits de valeur déterminée sur les b bits de poids faibles dudit signal d'amplitude quantifié codé supportant le code imbriqué, de façon à engendrer un signal quantifié codé masqué,
   - un élément de décalage binaire de un bit à gauche dudit signal quantifié codé masqué pour engendrer un signal quantifié codé masqué double,
   - un premier élément additionneur d'une première valeur $2^b$, où b représente le nombre de bits effectivement masqués, et d'une deuxième valeur $2DN_{OPT}$ correspondant au nombre optimal $b_{OPT}$ de bits de poids faible permettant d'assurer une transmission optimale, pour engendrer un signal codé de correction de valeur $2^b + 2DN_{OPT}$,
   - un deuxième élément (233) additionneur dudit signal quantifié codé masqué double 2I' et du signal codé de correction Icc délivré par le premier élément additionneur pour engendrer le signal d'amplitude quantifié codé restitué appliqué à l'entrée du quantificateur inverse (20).


**Patentansprüche**

1. Quantisierungsvorrichtung mit variablem digitalen Codierungsfluß in Abhängigkeit der Anzahl N digitaler Code oder Quantisierungspegel eines digitalen Signals mit einer Amplitudenverteilung gemäß einem Gesetz der Wahrscheinlichkeitsdichte p(x) vom Typ des Laplace-Gesetzes, und zwar $p(x) = \alpha/2\, e^{-\alpha|x|}$, wobei $|x|$ die Amplitude des Signals auf einem symmetrischen Betriebsintervall [-xmax, + xmax] bedeutet, dadurch gekennzeichnet, daß die Vorrichtung einen Quantisierungsoperator (1) beinhaltet, welcher aufweist:
   - einen Berechnungsoperator (10) eines Amplitudensignals $|x|$ und eines Vorzeichensignals (IS) des digitalen Signals,
   - einen Kombinationsoperator (11) des Amplitudensignals $|x|$ und der Anzahl N digitaler Code durch Subtraktion eines Ausdrucks $K_N = 3/\alpha\, Log(N+1)$, wobei der Operator ein normiertes codiertes Amplitudensignal (R) in Abhängigkeit der Anzahl N digitaler Code ausgibt,
   - einen Quantisierer (12) mit festen Quantisierungsschwellen, bei dem der Wert der Schwellen Li bestimmt wird durch die Beziehung:

$$Li \;=\; -\frac{3}{\alpha}\, Log\,(2i + 1)$$

   wobei i die Reihenfolge der Quantisierungsschwellen bezeichnet, wobei der Quantisierer mit festen Schwellen das normierte codierte Amplitudensignal (R) empfängt und ein codiertes quantisiertes Amplitudensignal (IM) mit einem Codierungsfluß in Abhängigkeit der Anzahl N digitaler Code oder Quantisierungspegel.

2. Vorrichtung nach Anspruch 1, dadurch gekennzeichnet, daß die Anzahl von Quantisierungspegeln des Quantisierers (12) mit festen Schwellen gleich Nmax/2 - 1 ist für eine gerade maximale Anzahl von Coden Nmax.

3. Vorrichtung nach einem der vorhergehenden Ansprüche, dadurch gekennzeichnet, daß für einen gegebenen Wert N der Anzahl von Coden die Quantisierungsschwellwerte der Vorrichtung die folgende Beziehung erfüllen:

$$xi = \frac{3}{\alpha} (Log(N + 1) - Log(2i + 1))$$

für $1 \leqq i \leqq N/2$     falls N gerade ist
oder für $1 \leqq i \leqq (N-1)/2$     falls N ungerade ist.

4. Quantisierungsvorrichtung mit variablem digitalem Codierungsfluß in Abhängigkeit der Anzahl N digitaler Code oder Quantisierungspegel eines codierten quantisierten Amplitudensignals (IM), ausgehend von einem digitalen Signal (x) mit einer Amplitudenverteilung gemäß einem Gesetz der Wahrscheinlichkeitsdichte p(x) vom Typ des Laplace-Gesetzes, und zwar $p(x) = \alpha/2 \, e^{-\alpha|x|}$, wobei $|x|$ die Amplitude des digitalen Signals auf einem symmetrischen Amplitudenintervall [-xm, + xm] darstellt, wobei das codierte quantisierte Amplitudensignal (IM) N digitale Code aufweist, dadurch gekennzeichnet, daß die Vorrichtung einen inversen Quantisierungsoperator (2) beinhaltet, welcher aufweist:
- einen inversen Quantisierer (20) mit festen inversen Quantisierungspegeln $\Gamma i$, deren Wert gegeben ist durch die folgende Beziehung:

$$\Gamma i = - \frac{3}{\alpha} Log(2i + 2)$$

wobei i die Anzahl der inversen Quantisierungspegel bezeichnet, wobei der inverse Quantisierer mit festen Pegeln das codierte quantisierte Amplitudensignal (IM) empfängt und ein normiertes decodiertes Amplitudensignal (IMDN) ausgibt in Abhängigkeit der Anzahl N digitaler Code oder Quantisierungspegel
- einen Kombinationsoperator (21) des normierten decodierten Amplitudensignals (IMDN) und der Anzahl N digitaler Code oder Quantisierungspegel durch Addition eines Ausdrucks $K_N = 3/\alpha \, Log \, (N+1)$, wobei der Kombinationsoperator ein decodiertes von der Anzahl N digitaler Code oder Quantisierungspegel unabhängiges Amplitudensignal $|y|$ ausgibt,
- einen Kombinationsoperator (22) des decodierten Amplitudensignals $|y|$ und eines Vorzeichensignals (IS), welches es gestattet, ein dem digitalen Signal x entsprechendes wiederhergestelltes digitales Signal y auszugeben.

5. Vorrichtung nach Anspruch 4, dadurch gekennzeichnet, daß die Anzahl inverser Quantisierungspegel des inversen Quantisierers mit festen Pegeln Nmax/2 ist für eine gerade maximale Anzahl digitaler Code Nmax.

6. Vorrichtung nach einem der Ansprüche 4 oder 5, dadurch gekennzeichnet, daß die inversen Quantisierungspegel des inversen Quantisierungsoperators die folgende Beziehung erfüllen:

$$yi = \frac{3}{\alpha} (Log(N + 1) - Log(2i + 1))$$

für

$1 \leqq i \leqq N/2 \, \text{-}1$     falls N gerade ist,
$1 \leqq i \leqq (N-1)/2$     falls N ungerade ist.

7. Vorrichtung nach einem der vorhergehenden Ansprüche, dadurch gekennzeichnet, daß für einen gegebenen Wert N der Anzahl von Coden oder Quantisierungspegeln mit $1 \leqq N \leqq Nmax$ das codierte quantisierte Amplitudensignal IM die folgende Beziehung erfüllt:
für N gerade         $D_N \leqq IM \leqq D_N + N/2 - 1$
für N ungerade       $D_N \leqq IM \leqq D_N + (N-1)/2$
wobei $D_N$ einen minimalen Wert von IM darstellt.

8. Quantisierungsvorrichtung nach einem der Ansprüche 1 bis 3, dadurch gekennzeichnet, daß hinsichtlich der Erzeugung eines codierten quantisierten Amplitudensignals, welches einen verschachtelten Code auf eine Anzahl optimierter Code $N_{OPT}$ stützt und dessen Bits leichten Gewichts während der Übertragung modifiziert werden können, der Quantisierungsoperator weiterhin ein Operatormodul zur Modifizierung des codierten quantisierten Amplitudensignals aufweist, zur Erzeugung des den verschachtelten Code stützenden codierten quantisierten Amplitudensignals, wobei die Modifizierung durchgeführt wird durch Subtraktion von dem codierten quantisierten Amplitudensignals einer Größe $D_{NOPT}$, der Anzahl optimaler Code $N_{OPT}$ entspricht.

9. Quantisierungsvorrichtung nach einem der Ansprüche 4 bis 8, dadurch gekennzeichnet, daß hinsichtlich des Empfangens eines codierten quantisierten Amplitudensignals, welches einen verschachtelten Code auf einer optimalen Anzahl digitaler Code stützt, $N_{OPT}$, die eine Anzahl b modifizierter Bits leichten Gewichts aufweist, wobei der inverse Quantisierungsoperator weiterhin stromaufseitig des inversen Quantisierers mit festen inversen Quantisierungspegeln ein Modul zum Maskieren der b modifizierten Bits und zum Verschieben der Bits des codierten quantisierten Amplitudensignals aufweist, welches den verschachtelten Code zum Erzeugen eines wiederhergestellten codierten quantisierten Amplitudensignals stützt, das an den Eingang des inversen Quantisierers mit festen inversen Quantisierungspegeln angelegt wird.

10. Inverse Quantisierungsvorrichtung nach Anspruch 9, dadurch gekennzeichnet, daß das Maskierungs- und Verschiebungsmodul aufweist:
   - ein Eingabeelement von Wert-Bits, welche auf den b Bits leichten Gewichts des den verschachtelten Code stützenden codierten quantisierten Amplitudensignals bestimmt sind, um ein maskiertes codiertes quantisiertes Signal zu erzeugen,
   - ein Element zur binären Verschiebung um ein Bit nach links des maskierten codierten quantisierten Signals, um ein doppeltes maskiertes codiertes quantisiertes Signal zu erzeugen,
   - ein erstes Addierelement eines ersten Wertes $2^b$, wobei b die Anzahl der effektiv maskierten Bits darstellt, und eines zweiten Werts $2DN_{OPT}$, welcher der optimalen Anzahl $b_{OPT}$ von Bits leichten Gewichts entspricht, wodurch eine optimale Übertragung sichergestellt wird, um ein codiertes Korrektursignal vom Wert $2^b + 2DN_{OPT}$ zu erzeugen,
   - ein zweites Addierelement (233) des doppelten maskierten codierten quantisierten Signals 2I' und des codierten Korrektursignals ICC, welches von dem ersten Addierelement ausgegeben wird, um das an den Eingang des inversen Quantisierers (20) angelegte wiederhergestellte codierte quantisierte Amplitudensignal zu erzeugen.

## Claims

1. Quantization device with variable digital coding rate as a function of the number N of digital codes or quantization levels, of a digital signal with amplitude distribution according to a probability density law p(x) of the Laplace law type,
   $p(x) = \alpha/2\ e^{-\alpha|x|}$, where $|x|$ represents the amplitude of the signal over a symmetrical operation interval, [-xmax, +xmax], characterized in that said device comprises a quantizer operator (1) including :
   - an operator (10) for calculating an amplitude signal $|x|$ and a sign signal (IS) from said digital signal,
   - an operator (11) for combining said amplitude signal $|x|$ and the number N of digital codes by subtraction of a term

$$KN = \frac{3}{\alpha} Log\ (N + 1)$$

   said operator delivering a normed coded amplitude signal (R) as a function of the number N of digital codes,
   - a quantizer (12) with fixed quantization thresholds in which the value of the thresholds Li is determined by the relation

$$Li = -\frac{3}{\alpha} Log\ (2i + 1)$$

   where i designates the order of the quantization thresholds, said fixed level quantizer receiving said normed coded amplitude signal (R) and delivering a coded quantized amplitude signal (IM) whose coding bit rate is a function of the number N of digital codes or quantization levels.

2. Device according to claim 1, characterized in that the number of quantization thresholds of the fixed threshold quantizer (12) is equal to Nmax/2-1 for a maximum even number of codes Nmax.

3. Device according to one of preceeding claims, characterized in that for a given value N of the number of codes the quantization threshold values of this device verify the relation :

$$xi = \frac{3}{\alpha} (Log\ (N + 1) - Log\ (2i + 1))$$

for $1 \leqq i \leqq N/2$      if N is even
for $l \leqq i \leqq (N-1)/2$      if N is uneven.

4. Quantization device with variable digital coding rate, as a function of the number N of digital codes or quantization levels of a coded quantized amplitude signal (IM) from a digital signal (x) with amplitude distribution according to a probability density law p(x) of the Laplace law type,

$p(x) = \alpha/2 \; e^{-\alpha|x|}$ where $|x|$ represents the amplitude of the digital signal over a symmetrical amplitude interval [-xm, +xm], the coded quantized amplitude signal (IM) comprising N digital codes, characterized in that said device comprises a reverse quantizer operator (2) including:

- a reverse quantizer (20) with fixed reverse quantization levels Γi, whose value is given by the relation

$$\Gamma i = -\frac{3}{\alpha} \text{Log} (2i + 2)$$

where i designates the order of the reverse quantization levels, said fixed level reverse quantizer receiving said coded quantized amplitude signal (IM) and delivering a normed decoded amplitude signal (IMDN) as a function of the number N of digital codes or quantization levels,
- an operator (21) for combining said normed decoded amplitude signal (IMDN) and the number N of digital codes of quantization levels by addition of a term

$$KN = \frac{3}{\alpha} \text{Log} (N + 1)$$

this combination operator delivering a decoded amplitude signal $|y|$ independant of the number N of digital codes or quantization levels,
- an operator (22) for combining said decoded amplitude signal $|y|$ and a sign signal (IS) for delivering a reconstituted digital signal (y) corresponding to said digital signal (x).

5. Device according to claim 4, characterized in that the number of reverse quantization levels of the fixed level quantizer is equal to Nmax/2 for a maximum even number of digital codes Nmax.

6. Device according to claim 4 or 5, characterized in that said reverse quantization levels of said reverse quantizer operator verify the relation :

$$yi = \frac{3}{\alpha} (\text{Log} (N + 1) - \text{Log} (2i + 2))$$

for

$1 \leqq i \leqq N/2\text{-}1$      if N is even,
$i \leqq i \leqq (N\text{-}1)/2$      if N is uneven.

7. Device according to one of preceeding claims, characterized in that, for a given value N of the number of codes of quantization levels, with $1 \leqq N \leqq Nmax$, said coded quantized amplitude signal (IM) verifies the relation :
for N even      $D_N \leqq IM \leqq D_N + N/2\text{-}1$
for N uneven      $D_N \leqq IM \leqq D_N + (N\text{-}1)/2$
where $D_N$ represents a minimum value of said coded quantized amplitude signal (IM).

8. Device according to one of claims 1 to 3, characterized in that, for generating a coded quantized amplitude signal supporting an imbricated code over an optimum number of codes $N_{OPT}$ and in which the low order bits may be modified during transmission, said quantizer operator further comprises an operator module for modifying the coded quantized amplitude signal for generating said coded quantized amplitude signal supporting the imbricated code, the modification being made by subtracting a quantity $D_{NOPT}$ corresponding to the optimum number of codes $N_{OPT}$ from said coded quantized amplitude signal.

9. Device according to one of claims 4 to 8, characterized in that, for receiving a coded quantized amplitude signal supporting an imbricated code over an optimum number of digital codes, $N_{OPT}$, comprising a number b or modified low order bits, said reverse quantizer operator further comprises, upstream of said reverse quantizer with fixed reverse quantization levels, a module for masking the b modified bits and for shifting the bits of the coded quantized amplitude signal supporting the imbricated code for generating a restored coded quantized amplitude signal applied to the input of said reverse quantizer with fixed reverse quantization levels.

10. Reverse quantization device according to claim 9, characterized in that said masking and shift module comprises :
- an element for writing bits of given value on the b low order bits of said coded quantized amplitude signal supporting the imbricated code so as to generate a masked coded quantized signal,
- an element for shifting by a bit to the left of said masked coded quantized signal for generating a double masked coded quantized signal,

- a first adder element adding a first value $2^b$, where b represents the number of bits effectively masked, and a second value $2DN_{OPT}$ corresponding to the optimum number $b_{OPT}$ of low order bits ensuring optimum transmission, for generating a coded correction signal of value $2^b + 2DB_{OPT}$,
- a second element (233) for adding said double masked coded quantized signal $2I'$ and said coded correction signal Icc delivered by the first adder element for generating the restored coded quantized amplitude signal applied to the input of said reverse quantizer (20).

# FIG.1a.

X
(ENTRÉE)

CALCUL AMPLITUDE — 10

|X|

+ − 111 R

− K$_N$

TABLE K$_N$ — 110

QUANTIFI--CATEUR FIXE SEUILS Li — 12

I$_s$
(SIGNE)

I$_M$
(AMPLITUDE)

N
(NOMBRE DE CODES)

COMBINAISON AMPLITUDE // NOMBRE DE CODES — 11

CODAGE

# FIG.1b.

I$_s$
(SIGNE)

I$_M$
(AMPLITUDE)

QUANTIFI--CATEUR INVERSE FIXE NIVEAU Ti — 20

IMDN

+ 211

K$_N$

TABLE K$_N$ — 210

|y|

SIGNE // AMPLITUDE — 22

y
(SORTIE)

N
(NOMBRE DE CODES)

COMBINAISON AMPLITUDE // NOMBRE DE CODES — 21

DÉCODAGE

FIG.2.

# FIG.3a.

# FIG.3b.